# EUROPÄISCHE PATENTANMELDUNG

(11) **EP 4 311 712 A1**
(43) Veröffentlichungstag der Anmeldung: **31.01.2024**
(21) Anmeldenummer: 23187620.2
(22) Anmeldetag: 25.07.2023
(51) Int. Cl.: B60L 3/00, B60L 7/08, B60L 15/20, B60W 30/18

(54) **VERFAHREN ZUM VERRINGERN EINER WEGROLLGESCHWINDIGKEIT EINER FAHRBAREN, EINEN ELEKTRISCHEN ANTRIEBSMOTOR UMFASSENDEN MASCHINE**

(30) Priorität: 29.07.2022 AT 505752022
(71) Anmelder: Wacker Neuson Linz GmbH, 4063 Hörsching (AT)
(72) Erfinder: Farthofer, Dieter, 4052 Ansfelden (AT)
(74) Vertreter: Hübscher & Partner Patentanwälte GmbH

(57) **Zusammenfassung**

Es wird ein Verfahren zum Verringern einer Wegrollgeschwindigkeit, insbesondere zum Verhindern eines Wegrollens einer fahrbaren, einen elektrischen Antriebsmotor (2) umfassenden Maschine (1) aus einer Halteposition beschrieben, wobei ein Geschwindigkeitssensor (4a) die Rollgeschwindigkeit und ein Richtungssensor (4b) die Rollrichtung der Maschine (1) beim Wegrollen erfasst und wobei eine Haltesteuereinheit (3) in Abhängigkeit der Rollgeschwindigkeit und der Rollrichtung der Maschine (1) den Antriebsmotor (2) so ansteuert, dass dieser mit einem, einem Wegrollen entgegenwirkenden, Drehmoment beaufschlagt wird. Um dieses Verfahren derart zu verbessern, dass dieses unabhängig von notwendigen von einem Fahrer vorzunehmenden Handlungen die Maschine gegen ein Wegrollen sichert, wird vorgeschlagen, dass die Haltesteuereinheit (3) zum Verringern der Wegrollgeschwindigkeit insbesondere zum Verhindern des Wegrollens den Antriebsmotor (2) nur dann zur Drehmomentbeaufschlagung ansteuert, wenn eine Fahrbefehlseinrichtung (5) deaktiviert ist und wenn die Rollrichtung von einem Signal eines Fahrrichtungsgebers abweicht.

## Beschreibung

Die Erfindung bezieht sich auf ein Verfahren zum Verringern einer Wegrollgeschwindigkeit, insbesondere zum Verhindern eines Wegrollens, also zum Entgegenwirken eines Wegrollens, einer fahrbaren, einen elektrischen Antriebsmotor umfassenden Maschine aus einer Halteposition, wobei ein Geschwindigkeitssensor die Rollgeschwindigkeit und ein Richtungssensor die Rollrichtung der Maschine beim Wegrollen erfasst und wobei eine Wegrollsicherungssteuereinheit in Abhängigkeit der Rollgeschwindigkeit und der Rollrichtung der Maschine den Antriebsmotor so ansteuert, dass dieser mit einem, einem Wegrollen entgegenwirkenden, Drehmoment beaufschlagt wird.

Elektrische Antriebsmotoren von fahrbaren Maschinen weisen im abgestellten Zustand kein oder nur ein geringes Drehmoment auf. Steht eine solche fahrbare Maschine auf einer geneigten Oberfläche, beispielsweise auf einem Hang, rollt diese schwerkraftbedingt abwärts der Oberfläche, wenn keine Bremsvorrichtung betätigt ist.

Gemäß der DE 102010034286 A1 weist ein Verfahren zum Verringern einer Wegrollgeschwindigkeit zwei Steuerschemata auf. Das zweite Steuerschema wird dann eingesetzt, wenn das Fahrzeug sich in einer nicht beabsichtigten Richtung bewegt, d. h. die vom Bediener gewählte Bewegungsrichtung unterscheidet sich von der durch den Drehstellungssensor angegebenen Bewegungsrichtung. Das erste Steuerschema wird dann eingesetzt, wenn die Fahrzeugbewegungsrichtung eine Vorwärtsrichtung ist und die Stellung der Getriebebereichs-Wähleinrichtung (PRNDL) angibt, dass die vom Bediener gewählte Bewegungsrichtung einen Vorwärtsgang, z. B. D (Fahren) oder L (Niedrig) für die beispielhafte Getriebebereichs-Wähleinrichtung (PRNDL) umfasst. Somit wird das Verfahren auch dann eingesetzt, wenn die Rollrichtung einem Signal eines Fahrrichtungsgebers entspricht.

Aus der US 2011029172 A1 ist ein Regelmechanismus zur Wegrollverhinderung bekannt, der einsetzt, wenn die Wegrollrichtung von dem Signal des Fahrrichtungsgebers abweicht, es wird jedoch nicht unmittelbar und eindeutig offenart, dass der Regelmechanismus nur dann einsetzt, wenn die Wegrollrichtung von dem Signalrichtungsgeber abweicht. Gemäß der D2 könnte demnach durchaus auch dann der Regelmechanismus einsetzen, wenn die Wegrollrichtung dem Signal des Fahrrichtungsgebers entspricht.

Um ein solches Wegrollen zu verhindern, ist aus der DE 112013001732T5 ein Verfahren zum Verringern einer Wegrollgeschwindigkeit bzw. zum Verhindern eines Wegrollens einer fahrbaren, einen elektrischen Antriebsmotor umfassenden Maschine aus einer Halteposition bekannt. Hierbei erfasst ein Geschwindigkeitssensor die Rollgeschwindigkeit und ein Richtungssensor die Rollrichtung der Maschine beim Wegrollen. Entspricht die Rollrichtung nicht der gewünschten Fahrrichtung, welche über einen Fahrrichtungsgeber, beispielsweise über einen Ganghebel vorgebbar ist, so steuert eine Wegrollsicherungssteuereinheit in Abhängigkeit der Rollgeschwindigkeit und der Rollrichtung der Maschine den Antriebsmotor so an, dass dieser mit einem dem Wegrollen entgegenwirkenden Drehmoment beaufschlagt wird. Nachteilig daran ist allerdings, dass ein Wegrollen nur dann verhindert bzw. verringert wird, wenn die Rollrichtung nicht der über den Fahrrichtungsgeber vorgebbaren Fahrrichtung entspricht, sodass ein Wegrollen in die vorgegebene Fahrrichtung immer noch uneingeschränkt möglich ist. Steht demnach eine fahrbare Maschine mit ihrem vorderen Bereich hangabwärts und ist die Fahrrichtung vorwärts durch den Fahrrichtungsgeber vorgegeben, so greift das Verfahren nicht ein, sodass die Maschine ohne betätigte Bremsvorrichtung unkontrolliert hangabwärts zu rollen beginnt. Demnach muss der Fahrer beim Abstellen der Maschine auf einem Hang auf eine korrekte Stellung des Fahrrichtungsgebers achten.

Der Erfindung liegt somit die Aufgabe zugrunde, ein Verfahren der eingangs geschilderten derart zu verbessern, dass dieses unabhängig von notwendigen von einem Fahrer vorzunehmenden Handlungen die Maschine gegen ein Wegrollen sichert bzw. einem solchen Wegrollen entgegenwirkt.

Die Erfindung löst die gestellte Aufgabe dadurch, dass die Wegrollsicherungssteuereinheit zum Verringern der Wegrollgeschwindigkeit insbesondere zum Verhindern des Wegrollens den Antriebsmotor nur dann zur Drehmomentbeaufschlagung ansteuert, wenn eine Fahrbefehlseinrichtung deaktiviert ist und wenn die Rollrichtung von einem Signal eines Fahrrichtungsgebers abweicht. Zufolge der erfindungsgemäßen Merkmale kann die Maschine, beispielsweise eine Arbeitsmaschine, wie ein Radlader, Dumper, Bagger und dergleichen, gegen ein Wegrollen aus einer Halteposition gesichert werden bzw. einem solchen Wegrollen entgegengewirkt werden, wenn ein Fahrer beim Aussteigen keine aktiven Maßnahmen trifft, da sich ja die Fahrbefehlseinrichtung ohne Fahrer, der diese betätigt, in einem deaktivierten Zustand befindet. Das Verfahren greift somit ohne notwendiges Zutun des Fahrers ein und verhindert ein Wegrollen bzw. schränkt die Wegrollgeschwindigkeit ein und zwar auch dann, wenn diese in die von einem etwaigen Fahrrichtungsgeber vorgegebene Fahrrichtung wegrollt, da die Bedingung zum Eingreifen des Verfahrens ja von der fahrrichtungsunabhängigen Fahrbefehlseinrichtung abhängig ist. Ist diese deaktiviert, also nicht betätigt und erfassen der Geschwindigkeitssensor eine Rollgeschwindigkeit oberhalb eines Unterschwellwerts, so steuert die Wegrollsicherungssteuereinheit in Abhängigkeit der Rollgeschwindigkeit und der Rollrichtung der Maschine den Antriebsmotor so an, dass dieser mit einem, dem Wegrollen entgegenwirkenden, Drehmoment beaufschlagt wird. Die Wirkrichtung des beaufschlagten Drehmomentes muss demnach der Drehrichtung des Antriebsmotors beim Wegrollen entgegengesetzt sein. Je nach vorgegebenen Betrag des Drehmoments kann ein Wegrollen völlig verhindert werden oder aber nur eingeschränkt werden, in dem die Wegrollgeschwindigkeit auf ein vorgebbares Niveau gesenkt wird. Um ein Wegrollen einer Maschine völlig zu verhindern muss der Betrag des beaufschlagten Drehmomentes so gewählt sein, dass dieser im Wesentlichen gleich wie die auf die Maschine beim Wegrollen einwirkende Kraft ist. Zur Beaufschlagung des Antriebsmotors mit einem Drehmoment kann dieser mit Spannung beaufschlagt werden, wobei die effektive Spannung aus der Rollgeschwindigkeit ermittelt wird. Dabei kann auch eine von der Rollgeschwindigkeit unabhängige Mindestspannung vorgesehen sein, mit der der Motor beim Wegrollen beaufschlagt wird. Auf der Wegrollsicherungssteuereinheit kann ein Kennfeld hinterlegt sein, das die anzulegende Spannung bei einer bestimmten, erfassten Rollgeschwindigkeit vorgibt. Die Wegrollsicherungssteuereinheit kann jedoch auch über eine Rampenfunktion verfügen, die den Antriebsmotor solange mit einer steigenden Spannung beaufschlagt, bis die Rollgeschwindigkeit gleich null ist, was vor allem bei Maschinen mit variierenden Lasten vorteilhaft ist. Die Ermittlung der Rollgeschwindigkeit kann mittels eines Drehzahlsensors, eines Drehwinkelsensors oder anhand eines GPS-Sensors als Geschwindigkeitssensor erfolgen. Die Ermittlung der Rollrichtung kann beispielsweise über einen Drehwinkelsensor oder einen GPS-Sensor als Richtungssensor erfolgen. In einer bevorzugten Ausführungsform umfasst eine Sensoreinheit den Geschwindigkeitssensor und den Richtungssensor. Die Fahrbefehlseinrichtung kann beispielsweise ein Gaspedal, Inchpedal, und/oder Joystick sein, sodass bei nicht betätigen dieser, das erfindungsgemäße Verfahren aktiviert wird.

Während des Betriebs der Maschine kann im Sinne einer ressourcenschonenden Fahrweise ein Ausrollen der Maschine gewünscht sein, ohne dabei die Fahrbefehlseinrichtung zu aktivieren. Damit in einem solchen Fall das Verfahren nicht in unerwünschter Weise eingreift, kann die Wegrollsicherungssteuereinheit den Antriebsmotor zur Drehmomentbeaufschlagung nur dann ansteuern, wenn darüber hinaus die Rollgeschwindigkeit unterhalb eines Aktivierungsschwellwerts liegt. Geht der Fahrer somit während voller Fahrt von der Fahrbefehlseinrichtung herunter, so wird das Verfahren zunächst nicht initiiert. Erst wenn ein Aktivierungsschwellwert, beispielsweise 1 km/h unterschritten wird, steuert die Wegrollsicherungssteuereinheit den Antriebsmotor zur Drehmomentbeaufschlagung, die dem Rollen entgegenwirkt und in weiterer

Folge zum Stillstand bzw. zur weiteren Geschwindigkeitsreduktion der Maschine führt, an.

Um ein unerwünschtes Eingreifen des Verfahrens zu verhindern, kann die Wegrollsicherungssteuereinheit den Antriebsmotor zur Drehmomentbeaufschlagung nur dann ansteuern, wenn die Rollrichtung von einem Signal eines Fahrrichtungsgebers abweicht. Der Fahrrichtungsgeber kann mehrere Einstellungen beispielsweise vorwärts, neutral und rückwärts aufweisen. Wird eine Rollrichtung erfasst, die nicht der Richtung der vorgegebenen Einstellung entspricht, kann das Verfahren freigegeben werden, insofern die anderen Bedingungen erfüllt sind. Während bei der Einstellung vorwärts und rückwärts die jeweiligen entgegengesetzten Rollrichtungen als Abweichungen erkannt werden, kann bei der Einstellung neutral jegliche Rollrichtung als Abweichung erkannt werden. Als Fahrrichtungsgeber kann ein Ganghebel eingesetzt werden.

Besonders einfach zu steuernde Bedingungen bei der Drehmomentbeaufschlagung des Antriebsmotors ergeben sich, wenn dieser über einen Wechselrichter erfolgt, welcher durch Pulsweitenmodulation und Frequenzänderung die Spannung am Antriebsmotor anlegt.

Um eine unnötige Aktivierung des Verfahrens zu verhindern, wird vorgeschlagen, dass die Wegrollsicherungssteuereinheit den Antriebsmotor zur Drehmomentbeaufschlagung nur dann ansteuert, wenn eine Bremsvorrichtung der Maschine deaktiviert ist. Dadurch wird eine redundante Sicherung verhindert, da die Maschine durch die Bremsvorrichtung ohnehin gegen ein Wegrollen gesichert ist. Als Bremsvorrichtung können beispielsweise eine Feststellbremse, eine Betriebsbremse und/oder eine Hilfsbremse vorgesehen sein.

Das Verfahren kann von einer Vorrichtung zum Verringern einer Wegrollgeschwindigkeit insbesondere zum Verhindern eines Wegrollens einer fahrbaren Maschine aus einer Halteposition durchgeführt werden. Die Vorrichtung umfasst eine fahrbare Maschine mit einem elektrischen Antriebsmotor, einen Geschwindigkeitssensor zum Erfassen der Rollgeschwindigkeit, einen Richtungssensor zum Erfassen der Rollrichtung der Maschine beim Wegrollen und eine Wegrollsicherungssteuereinheit, die dazu eingerichtet ist, in Abhängigkeit der Rollgeschwindigkeit und der Rollrichtung der Maschine den Antriebsmotor so anzusteuern, dass dieser mit einem, einem Wegrollen entgegenwirkenden, Drehmoment beaufschlagt wird, wobei die Wegrollsicherungssteuereinheit mit einer Fahrbefehlseinrichtung derart wirkverbunden ist, dass die Wegrollsicherungssteuereinheit zum Verringern der Wegrollgeschwindigkeit insbesondere zum Verhindern des Wegrollens den Antriebsmotor nur dann zur Drehmomentbeaufschlagung ansteuert, wenn eine Fahrbefehlseinrichtung deaktiviert ist, wobei die Wegrollsicherungssteuereinheit mit dem Richtungssensor derart wirkverbunden ist, dass diese den Antriebsmotor zur Drehmomentbeaufschlagung nur dann ansteuert, wenn darüber hinaus die Rollrichtung von einem Signal eines Fahrrichtungsgebers abweicht. Die Wegrollsicherungssteuereinheit kann separat ausgebildet sein oder Teil der Steuereinheit sein, die zum Zweck des Fahrens bzw. zum Betätigen der Werkzeuge der Maschine eingesetzt wird. Die Wegrollsicherungssteuereinheit kann mit dem Geschwindigkeitssensor derart wirkverbunden sein, dass diese den Antriebsmotor zur Drehmomentbeaufschlagung nur dann ansteuert, wenn darüber hinaus die Rollgeschwindigkeit unterhalb eines Aktivierungsschwellwerts liegt. Zur Drehmomentbeaufschlagung des Antriebsmotors kann die Wegrollsicherungssteuereinheit einen Wechselrichter umfassen, der den Antriebsmotor mit einer Spannung beaufschlagt. Darüber hinaus kann die Wegrollsicherungssteuereinheit mit einer Bremsvorrichtung derart wirkverbunden sein, dass die Wegrollsicherungssteuereinheit den Antriebsmotor zur Drehmomentbeaufschlagung nur dann ansteuert, wenn die Bremsvorrichtung deaktiviert ist.

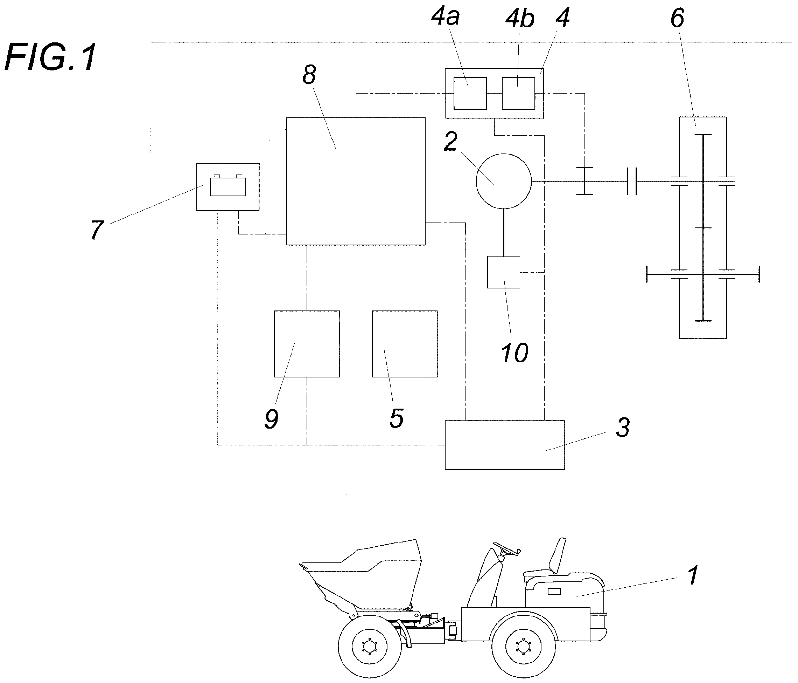

In der Zeichnung ist der Erfindungsgegenstand beispielsweise dargestellt. Es zeigen
- Fig. 1: eine schematische Darstellung der Vorrichtung zum Verringern einer Wegrollgeschwindigkeit insbesondere zum Verhindern eines Wegrollens einer fahrbaren Maschine und
- Fig. 2: ein schematisches Fließbild des Verfahrens zum Verringern einer Wegrollgeschwindigkeit insbesondere zum Verhindern eines Wegrollens einer fahrbaren Maschine.

Eine Vorrichtung zum Verringern einer Wegrollgeschwindigkeit insbesondere zum Verhindern eines Wegrollens einer fahrbaren Maschine 1 aus einer Halteposition umfasst eine fahrbare Maschine 1 mit einem elektrischen Antriebsmotor 2, der mit einer Wegrollsicherungssteuereinheit 3 wirkverbunden ist. Die Wegrollsicherungssteuereinheit 3 ist darüber hinaus mit einem Geschwindigkeitssensor 4a zum Erfassen der Rollgeschwindigkeit und mit einem Richtungssensor 4b zum Erfassen der Rollrichtung der Maschine 1 beim Wegrollen wirkverbunden. Der Geschwindigkeitssensor 4a und der Richtungssensor 4b können gemeinsam von einem Drehzahlsensor 4 gebildet sein. Erfindungsgemäß ist eine Fahrbefehlseinrichtung 5 vorgesehen, mit der die Wegrollsicherungssteuereinheit derart wirkverbunden ist, dass diese in Abhängigkeit der Rollgeschwindigkeit und der Rollrichtung der Maschine 1 den Antriebsmotor 2 so ansteuert, dass dieser mit einem, einem Wegrollen entgegenwirkenden, Drehmoment beaufschlagt wird und zwar nur dann, wenn die Fahrbefehlseinrichtung 5 deaktiviert ist. Auf diese Weise kann je nach Betrag des Drehmoments ein Wegrollen der Maschine 1 verhindert bzw. die Wegrollgeschwindigkeit verringert werden, auch wenn ein Fahrer ohne vorher Sicherheitsvorkehrungen zu treffen, die Maschine 1 verlässt, da durch die Drehmomentbeaufschlagung das mit dem Antriebsmotor 2 verbundene Getriebe 6 blockiert bzw. mit Widerstand beaufschlagt wird, sodass die Maschine 1 nicht schwerkraftbedingt unkontrolliert einen Hang hinunterrollen kann.

Zur Drehmomentbeaufschlagung des Antriebsmotors 2 kann ein von einer Batterie 7 versorgter Wechselrichter 8 eingesetzt werden, der mit der Wegrollsicherungssteuereinheit 3 wirkverbunden ist und der den Antriebsmotor zur Drehmomentbeaufschlagung mit Spannung versorgt.

Um ein gewolltes Ausrollen der Maschine 1 zu ermöglichen, ohne dass die Maschine 1 abgebremst wird, kann die Wegrollsicherungssteuereinheit 3 mit dem Geschwindigkeitssensor 4a derart wirkverbunden sein, dass diese den Antriebsmotor 2 zur Drehmomentbeaufschlagung nur dann ansteuert, wenn die Rollgeschwindigkeit unterhalb eines Aktivierungsschwellwerts liegt.

Eine richtungsabhängige Ansteuerung des Antriebsmotors 2 ergibt sich, wenn die Wegrollsicherungssteuereinheit 3 den Antriebsmotor 2 zur Drehmomentbeaufschlagung nur dann ansteuert, wenn der Richtungssensor 4b eine Rollrichtung erfasst und ein Signal ausgibt, das von einem Signal eines Fahrrichtungsgebers 9 abweicht.

Um einen redundanten Einsatz der Wegrollsicherungssteuereinheit 3 zu vermeiden, kann diese so ausgeführt sein, dass sie den Antriebsmotor 2 nur bei deaktivierter Bremsvorrichtung 10 mit einem Drehmoment beaufschlagt.

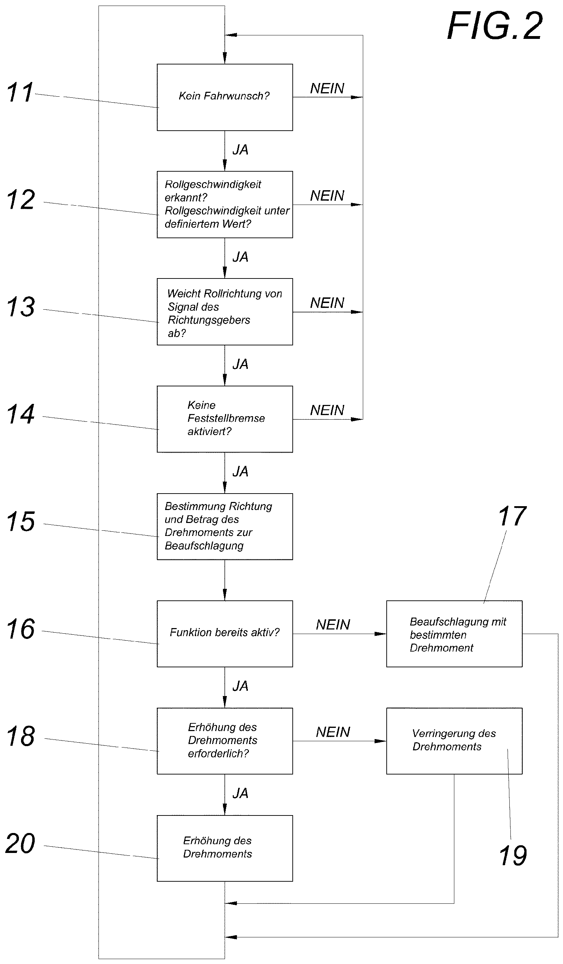

Fig. 2 zeigt ein erfindungsgemäßes Verfahren zum Verhindern eines Wegrollens einer fahrbaren Maschine.

Erfindungsgemäß wird in einem Schritt 11 überprüft, ob ein Fahrwunsch vorhanden ist. Ist ein Fahrwunsch vorhanden, wird das Verfahren nicht fortgeführt und kann gegebenenfalls von vorne beginnen.

Ist kein Fahrwunsch vorhanden, ist also die Fahrbefehlseinrichtung 5 deaktiviert, so wird in einem Schritt 12 die Rollgeschwindigkeit und die Rollrichtung ermittelt. Wird keine Rollgeschwindigkeit erfasst, wird das Verfahren nicht fortgeführt und kann gegebenenfalls von vorne beginnen. Vorzugsweise kann im Schritt 12 überprüft werden, ob die Rollgeschwindigkeit unterhalb eines Aktivierungsschwellwertes liegt. Liegt die Rollgeschwindigkeit über dem Aktivierungsschwellwert, wird das Verfahren nicht fortgeführt und kann gegebenenfalls von vorne beginnen.

Kann eine Rollgeschwindigkeit festgestellt werden und ist diese gegebenenfalls unter einem Aktivierungsschwellwert kann im optionalen Schritt 13 überprüft werden, ob die Rollrichtung von einem Signal eines Fahrrichtungsgebers 9 abweicht. Stimmt in diesem Fall, die Rollrichtung mit dem Signal des Fahrrichtungsgebers überein, wird das Verfahren nicht fortgeführt und kann gegebenenfalls von vorne beginnen. Dies ist beispielsweise der Fall, wenn der Fahrrichtungsgeber 9 die Einstellung vorne aufweist und die Rollrichtung ebenfalls nach vorne erfolgt.

Ist die Rollrichtung zum Signal des Fahrrichtungsgebers 9 verschieden, kann in einem weiteren optionalen Schritt 14 überprüft werden, ob eine Bremsvorrichtung 10 betätigt ist. Ist dies der Fall, wird das Verfahren nicht fortgeführt und kann gegebenenfalls von vorne beginnen.

Ist also kein Fahrwunsch vorhanden (Schritt 11), wird eine Rollgeschwindigkeit erkannt (Schritt 12), ist die Rollgeschwindigkeit unter einem vorgebbaren Aktivierungsschwellwert (optional im Schritt 12), entspricht die Rollrichtung nicht einer vorgegebenen Fahrrichtung (optionaler Schritt 13), ist die Bremsvorrichtung 10 deaktiviert (optionaler Schritt 14), so wird in einem Schritt 15 in Abhängigkeit der Rollgeschwindigkeit und der Rollrichtung der Maschine 1 der Betrag und die Richtung des Drehmoments bestimmt, mit der der Antriebsmotor 2 beaufschlagt werden muss, um einem Wegrollen entgegen zu wirken. Je nach vorgegebenen Betrag kann ein Wegrollen völlig verhindert werden oder bis zu einer vorgebbaren Geschwindigkeit abgebremst werden.

Diesem Schritt 15 kann ein Regelkreis nachgelagert sein, der an Schritt 11 anknüpft. In einem Schritt 16 kann überprüft werden, ob der Antriebsmotor 2 bereits mit einem Gegendrehmoment beaufschlagt ist. Ist dies nicht der Fall so wird der Antriebsmotor 2 in einem Schritt 17 mit dem in Schritt 15 bestimmten Drehmoment beaufschlagt. Ist dies schon der Fall, so war das ursprünglich aus Schritt 15 bestimmte Drehmoment nicht korrekt gewählt, also entweder zu hoch oder zu niedrig, sodass in einem Schritt 18 bestimmt wird, ob eine Erhöhung des Drehmoments erforderlich ist. Ist dies nicht der Fall, wird das Drehmoment am Antriebsmotor 2 verringert (Schritt 19). Ist eine Erhöhung erforderlich, da die Maschine immer noch unerwünschter Weise wegrollt, so wird dies im Schritt 20 durchgeführt. Nach diesen Schritten beginnt das Verfahren wieder bei Schritt 1.

## Patentansprüche

1. Verfahren zum Verringern einer Wegrollgeschwindigkeit, insbesondere zum Verhindern eines Wegrollens einer fahrbaren, einen elektrischen Antriebsmotor (2) umfassenden Maschine (1) aus einer Halteposition, wobei ein Geschwindigkeitssensor (4a) die Rollgeschwindigkeit und ein Richtungssensor (4b) die Rollrichtung der Maschine (1) beim Wegrollen erfasst und wobei eine Wegrollsicherungssteuereinheit (3) in Abhängigkeit der Rollgeschwindigkeit und der Rollrichtung der Maschine (1) den Antriebsmotor (2) so ansteuert, dass dieser mit einem, einem Wegrollen entgegenwirkenden, Drehmoment beaufschlagt wird, **dadurch gekennzeichnet, dass** die Wegrollsicherungssteuereinheit (3) zum Verringern der Wegrollgeschwindigkeit insbesondere zum Verhindern des Wegrollens den Antriebsmotor (2) nur dann zur Drehmomentbeaufschlagung ansteuert, wenn eine Fahrbefehlseinrichtung (5) deaktiviert ist und wenn die Rollrichtung von einem Signal eines Fahrrichtungsgebers (9) abweicht.

2. Verfahren nach Anspruch 1, **dadurch gekennzeichnet, dass** die Wegrollsicherungssteuereinheit (3) den Antriebsmotor (2) zur Drehmomentbeaufschlagung nur dann ansteuert, wenn darüber hinaus die Rollgeschwindigkeit unterhalb eines Aktivierungsschwellwerts liegt.

3. Verfahren nach Anspruch 1 oder 2, **dadurch gekennzeichnet, dass** die Drehmomentbeaufschlagung des Antriebsmotors (2) über einen Wechselrichter (8) erfolgt, welcher durch Pulsweitenmodulation und Frequenzänderung die Spannung am Antriebsmotor (2) anlegt.

4. Verfahren nach einem der Ansprüche 1 bis 3, **dadurch gekennzeichnet, dass** die Wegrollsicherungssteuereinheit den Antriebsmotor zur Drehmomentbeaufschlagung nur dann ansteuert, wenn eine Bremsvorrichtung (10) der Maschine (1) deaktiviert ist.

5. Vorrichtung zum Verringern einer Wegrollgeschwindigkeit insbesondere zum Verhindern eines Wegrollens einer fahrbaren Maschine (1) aus einer Halteposition umfassend eine fahrbare Maschine (1) mit einem elektrischen Antriebsmotor (2), einen Geschwindigkeitssensor (4a) zum Erfassen der Rollgeschwindigkeit, einen Richtungssensor (4b) zum Erfassen der Rollrichtung der Maschine beim Wegrollen und eine Wegrollsicherungssteuereinheit (3), die dazu eingerichtet ist, in Abhängigkeit der Rollgeschwindigkeit und der Rollrichtung der Maschine (1) den Antriebsmotor (2) so anzusteuern, dass dieser mit einem, einem Wegrollen entgegenwirkenden, Drehmoment beaufschlagt wird, wobei die Wegrollsicherungssteuereinheit (3) mit einer Fahrbefehlseinrichtung (5) derart wirkverbunden ist, dass die Wegrollsicherungssteuereinheit (3) zum Verringern der Wegrollgeschwindigkeit insbesondere zum Verhindern des Wegrollens den Antriebsmotor (2) nur dann zur Drehmomentbeaufschlagung ansteuert, wenn eine Fahrbefehlseinrichtung (5) deaktiviert ist, **dadurch gekennzeichnet, dass** die Wegrollsicherungssteuereinheit (3) mit dem Richtungssensor (4b) derart wirkverbunden ist, dass diese den Antriebsmotor (2) zur Drehmomentbeaufschlagung nur dann ansteuert, wenn darüber hinaus die Rollrichtung von einem Signal eines Fahrrichtungsgebers (9) abweicht.

6. Vorrichtung nach Anspruch 5, **dadurch gekennzeichnet, dass** die Wegrollsicherungssteuereinheit (3) mit dem Geschwindigkeitssensor (4a) derart wirkverbunden ist, dass diese den Antriebsmotor (2) zur Drehmomentbeaufschlagung nur dann ansteuert, wenn darüber hinaus die Rollgeschwindigkeit unterhalb eines Aktivierungsschwellwerts liegt.

7. Vorrichtung nach Anspruch 5 oder 6, **dadurch gekennzeichnet, dass** die Wegrollsicherungssteuereinheit (3) zur Drehmomentbeaufschlagung des Antriebsmotors (2) einen Wechselrichter (8) umfasst.

8. Vorrichtung nach einem der Ansprüche 5 bis 7, **dadurch gekennzeichnet, dass** die Wegrollsicherungssteuereinheit (3) mit einer Bremsvorrichtung (10) derart wirkverbunden ist, dass die Wegrollsicherungssteuereinheit (3) den Antriebsmotor (2) zur Drehmomentbeaufschlagung nur dann ansteuert, wenn darüber hinaus die Bremsvorrichtung (10) deaktiviert ist.
